# EUROPEAN PATENT APPLICATION

(11) **EP 0 673 106 A1**
(43) Date of publication of application: **20.09.1995**
(21) Application number: 95103447.9
(22) Date of filing: 10.03.1995
(51) Int. Cl.: H02M 3/335

(54) **A circuit for achieving a higher power factor in a switched mode power supply**

(30) Priority: 18.03.1994 FI 941299
(71) Applicant: NOKIA TECHNOLOGY GmbH, D-75175 Pforzheim (DE)
(72) Inventor: Vigelius, Kari, FI-2420 Salo (FI)

(57) **Abstract**

The invention relates to a circuit for achieving higher power factor in a switched-mode power supply in which there is a coupling (A) between the full-wave rectifier (DB) and the primary circuit (C, W1, S1) for feeding the energy from the rectifier (DB) to the transformer (M). According to the invention the coupling (A) is formed by an inductance (L) and a diode (D), connected in series, and is connected in the primary circuit (C, W1, S1) to a point between the switch (S1) and the filter capacitor (C) in such a way that at least a part of the primary winding (W1) is between the point and the filter capacitor (C). Preferably, the coupling (A) is connected to a point between the switch (S1) and the primary winding (W1). By this simple circuit a power factor of the order of 0.9 ... 0.96 is easily achieved. The circuit is able to operate within a wide mains voltage range, and is not sensitive to variations in the switching frequency or the load (LD).

## Description

The invention relates to switched-mode power supplies, and specifically to a circuit for achieving higher power factor in a switched-mode power supply.

There are a lot of electrical devices, intended to be connected to the mains supply, which does not operate as a resistive load but take a current from the mains which deviates from a sinusoidal one. Then the power factor, the ratio between the power drawn from the mains and the apparent power, is smaller than one, which causes additional losses in the mains. The switched-mode power supplies also belong to this type of devices.

This type of devices cause also interferences in the mains, and therefore more strict requirements are set internationally for the operation thereof. For example, a recent IEC proposal 77A for a new standard specifies more strict limits for ripple voltages caused by the devices in the mains. Most of the present switched-mode power supplies does not meet these requirements.

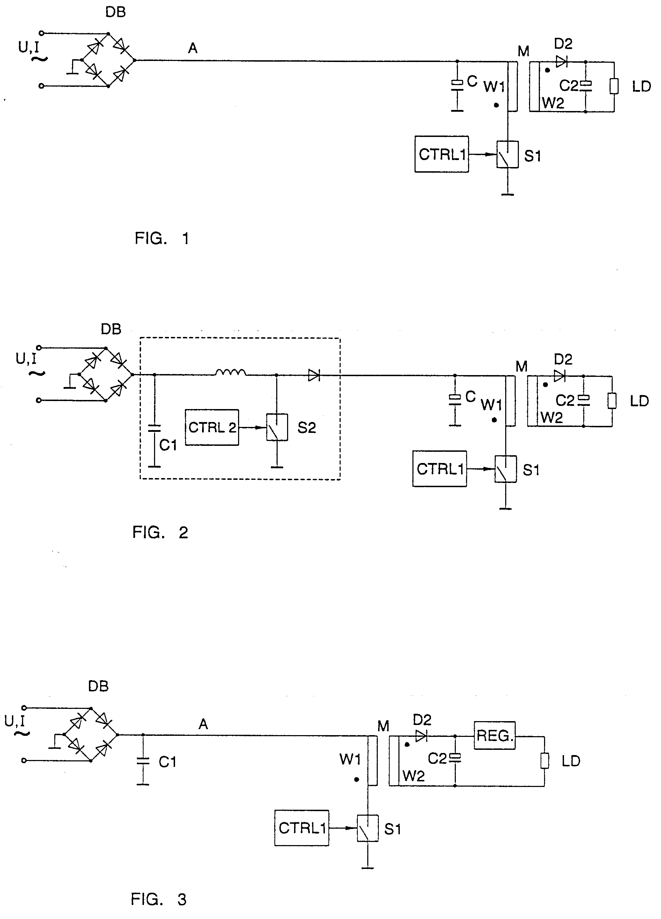

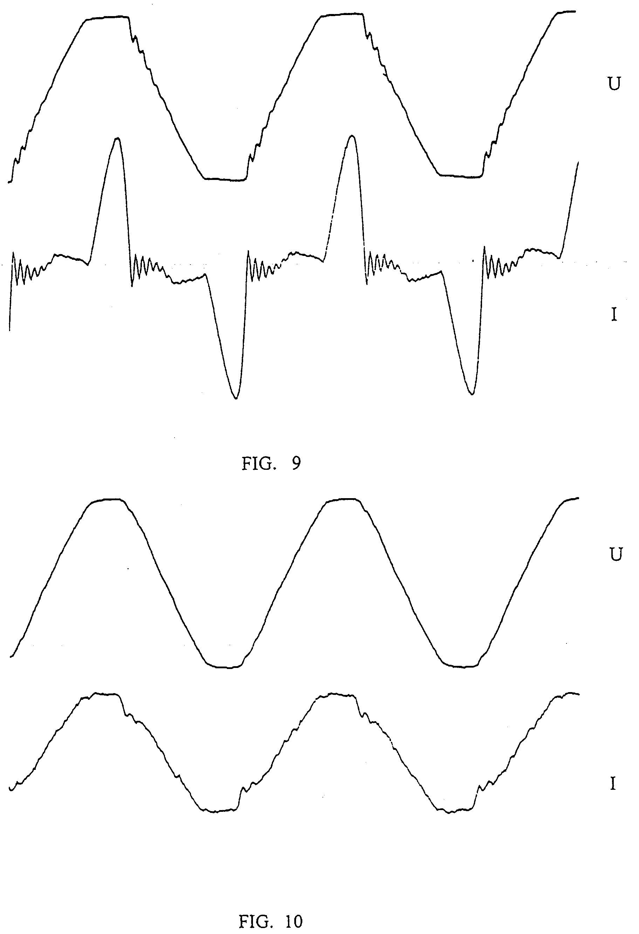

Figure 1 presents in principle a normal flyback-type switched-mode power supply. DB is a bridge-type rectifier connected to an AC energy distribution source, normally the mains, and C is a filter capacitor therefor. Power is supplied by conducting the full-wave rectified mains voltage from the rectifier DB via a coupling A to a primary circuit of a transformer M, including the filter capacitor C, a primary winding W1, and a switch S1 controlled by a controller CTRL1. In regard to the power factor it is essential that the mains rectifier is conducting only during a short time interval around the peaks of the mains voltage. So, the current drawn by the device from the mains is strongly pulsated, which results in a poor power factor, typically of the order of 0.6. Figure 9 presents the mains voltage-current characteristics of a normal switched-mode power supply.

Flyback-type operation of the switched-mode power supply of Fig. 1 means that, when the switch S1 is controlled to become closed energy is charged in the magnetic field of the transformer M. When the switch S1 is opened, the energy is discharged to the secondary winding W2. Respectively, in the forward-type operation the energy is transferred directly to the secondary winding. In the following, different prior art solutions for achieving a higher power factor in a switched-mode power supply are examined.

A common proposal for achieving higher power factor is a circuit according to Fig. 2. There, a set-up regulator, confined by a broken line in the figure, is added to the circuit normally used. A controller CTRL2, included in the regulator, is monitoring both the incoming full-wave rectified mains voltage and the voltage of the filter capacitor C. The product of these voltages is used to control the pulse ratio of a switch S2 in such a way that the waveform of the current drawn from the mains corresponds to the waveform of the voltage. At the same time the average voltage of the filter capacitor C is regulated. Some ripple, however, is still included in this voltage. Capacitor C1 has a small capacitance and prevents the switching frequency current from being passed to the mains. This corrective circuit achieves a very high power factor of the order of 0.99 ... 0.995.

A separate corrective circuit may be also a step-down-type or flyback-type circuit. The primary winding W1 of the transformer serves as a coil of a flyback-type corrective circuit in a known implementation (Siemens) of Fig. 3. Herewith isolation from the mains is provided at the same time. However, an additional regulator (REG) for each output voltage is then needed on the secondary side for removing the double mains-frequency ripple.

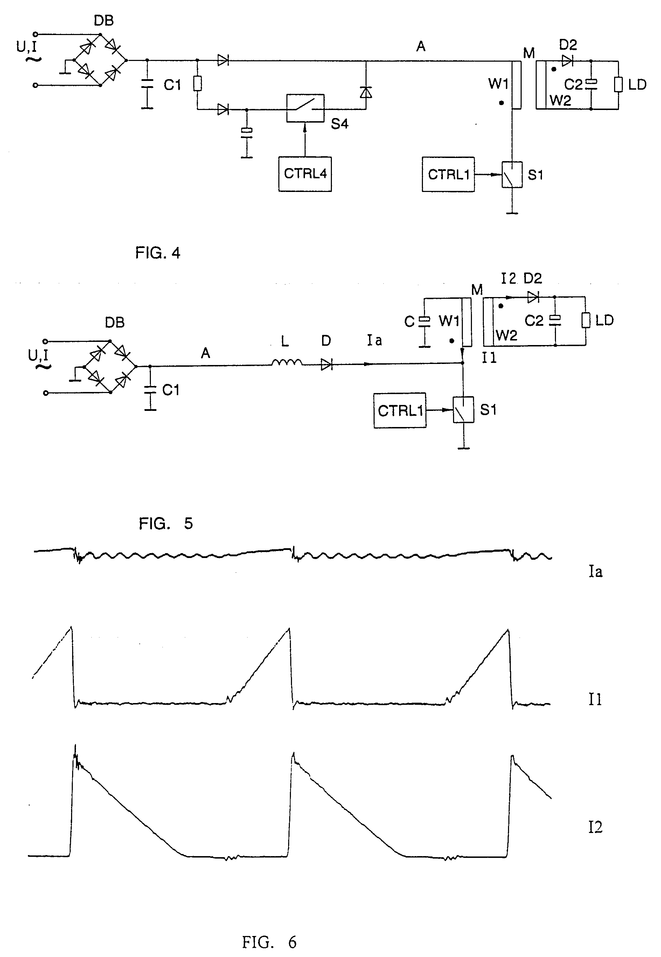

Figure 4 presents the solution developed by RCA. In principle, it is a flyback-type corrective circuit provided with a transformer wherein the double mains-frequency ripple voltage present at the secondary winding W2 is reduced by controlling appropriately the switch S4. Different versions of this circuit are known. The power factor is of the order of 0.9 ... 0.96.

The above prior art solutions for achieving higher power factor in a switched-mode power supply result in quite high power factor; but a drawback is that quite complicated circuits are needed, which causes additional costs in the manufacture of a switched-mode power supply. Also some less complicated circuits are proposed for achieving higher power factor in switched-mode power supplies, and with relatively good results, but characteristic of these circuits is that they are working properly only within a limited range in regard to the load, mains voltage or switching frequency of the power supply.

In DE-A1 40 25 322 a quite simple circuit is presented in which, with reference to Fig. 1 of the document, a step-up coupling formed by an inductance La and a diode D1 is connected from the mains rectifier BG to the filter capacitor Cb in the primary circuit. Via this step-up coupling the energy is fed in a conventional way first to the filter capacitor Cb, the voltage of which is then rising up significantly. Another diode D2 is coupled from a point between inductance La and diode D1 to a point between the primary winding Lp and the transistor switch T1. This diode D2 is conductive only when the transistor switch T1 is conductive. Transformer Tr is operating always like a transformer of a normal flyback-type power supply.

The object of the invention is to provide a novel and simple circuit for achieving a higher power factor in a switched-mode power supply, the circuit providing at the same time a high power factor and a wide operating range.

To this end a circuit for achieving a higher power factor in a switched-mode power supply, which includes at least:
a full-wave rectifier connected to an AC energy distribution source,
a transformer having a primary circuit including at least a filter capacitor a primary winding and a controlled switch connected in series from ground to ground, or respectively, and a secondary circuit, and
a coupling between the full-wave rectifier and the primary circuit for feeding the energy from the rectifier to the transformer,
is characterized in that said coupling is formed by an inductance and a diode, having the forward direction from the rectifier to the primary circuit, connected in series, the coupling being connected in the primary circuit to a point between the switch and the filter capacitor in such a way that at least a part of the primary winding is between the point and the filter capacitor.

In a preferred embodiment of this form of the invention the coupling for feeding the energy is connected in the primary circuit to a point between the primary winding and the switch. In other embodiments the coupling may be connected in the primary circuit to a tap point of the primary winding or to an extension of the primary winding.

In another form of the invention the primary circuit includes an additional winding in parallel with the primary winding and connected at the first end thereof to a point between the primary winding and the filter capacitor, and the coupling for feeding the energy is connected to the second end of the additional winding. The coupling may also be connected to a tap point of the additional winding.

In addition to the simplicity of the circuit according to the invention it may be implemented using quite inexpensive normal voltage components. This is due to the combined flyback-type and forward-type operation of the circuit which is disclosed more thoroughly here below. Another advantage is that the circuit operates in a very wide mains voltage range, for example from 90 to 270 volts, still meeting the requirements. Moreover, even a very significant change in the switching frequency does not affect remarkably the power factor. A power factor of the order of 0.9 ... 0.96 may easily be achieved by using the circuit of the invention.

In the following, the invention and the advantages thereof are disclosed in more detail with reference to the accompanying drawing in which the same parts or the parts corresponding to each other are designated by the same signs, and in which:
figure 1 presents a simplified circuit schematic of a normal flyback-type switched-mode power supply,
figure 2 presents a known switched-mode power supply provided with a separate corrective circuit for achieving a higher power factor,
figure 3 presents another known flyback-type corrective circuit for achieving a higher power factor,
figure 4 presents still another known flyback-type corrective circuit for achieving a higher power factor,
figure 5 presents, as a simplified circuit schematic, a preferred embodiment of a circuit according to the invention for achieving a higher power factor in a switched-mode power supply,
figure 6 shows the currents of a switched-mode power supply provided with a circuit according to the invention, when the instantaneous value of the mains voltage is zero,
figure 7 shows the currents of the same switched-mode power supply, when the instantaneous value of the mains voltage is at the maximum,
figure 8 shows the currents of the same switched-mode power supply, when the instantaneous value of the mains voltage is about a half of the maximum,
figure 9 shows the mains voltage-current characteristics of a normal switched-mode power supply,
figure 10 shows the mains voltage-current characteristics of a switched-mode power supply provided with a circuit according to the invention, and
figures 11 - 13 present various embodiments of connecting the coupling to the primary circuit in a circuit according to the invention.

Fig. 5 presents a preferred embodiment of a circuit according to the invention. The energy drawn from the mains is feeded via the coupling A from the full-wave rectifier DB to the transformer M and further to the load LD connected to the secondary circuit W1, D2, C2 of the transformer. The primary circuit of the transformer M includes the filter capacitor C, the primary winding W1 and the switch S1 controlled by the controller CTRL1 as connected in series from ground to ground. The switch S1 is preferably a transistor switch, advantageously a MOSFET transistor. According to the invention the coupling A for feeding energy is formed by an inductance L and a diode D which are connected in series. The coupling A is connected in the primary circuit of the transformer M to a point between the primary winding W1 and the switch S1. The current flowing through the coupling A is Ia, the primary circuit current is I1 and the secondary circuit current is I2.

In the implementation of the circuit of the invention the value of the inductance L is not critical. A good starting value is the same inductance as that of the primary winding W1 of the transformer. By this the limits set by the IEC standard proposal 77A are reached. By using a smaller inductance value a better power factor could be achieved, but at the same time the peak current of the switch S1 would increase so that using small inductance is not necessarily advantageous.

As an example, in the following, an implementation of the circuit according to the invention in a power supply of a color monitor, and the characteristics achieved by the implementation, are presented. Characteristic of the power supply are a wide input voltage range from 90 to 270 volts, the variation of the frequency according to the line frequency of the monitor between 31,5 kHz and 50 kHz, and the variation of the load according to the picture presented by the monitor. The primary inductance of the transformer is 700 µH, and so 700 µH is also chosen to be the value of the inductance L. The capacitor C1 is needed for suppressing the switching frequency interferences conducted to the mains, not properly for achieving a higher power factor. The capacitance of C1 is typically 100 nF. In the following Table 1 the power factors of the exemplary power supply, without the corrective circuit and as provided with the circuit according to the invention, are presented in different operating circumstances.

**Table 1**

| Mains voltage/V | Power/W | Power factor without the invention | Power factor with the invention |
|---|---|---|---|
| f = 31.5 kHz | | | |
| 90 | 69 | 0.71 | 0.98 |
| 270 | 64 | 0.62 | 0.92 |
| 90 | 95 | 0.72 | 0.98 |
| 270 | 85 | 0.62 | 0.92 |

| f = 50 kHz | | | |
|---|---|---|---|
| 90 | 76 | 0.71 | 0.95 |
| 270 | 70 | 0.63 | 0.96 |
| 90 | 101 | 0.73 | 0.91 |
| 270 | 90 | 0.63 | 0.96 |

The operation of the circuit according to the invention of Fig. 5 is illustrated by the current characteristics of Figures 6, 7 and 8. The characteristics show the current Ia of the inductance L, the current I1 of the primary circuit and the current I2 of the secondary circuit obtained with the different instantaneous values of the mains voltage. The transformer M operates both in flyback mode and in forward mode of operation.

In Fig. 6 the instantaneous value of the mains voltage is zero. The power supply operates then as a normal flyback-type switched-mode power supply.

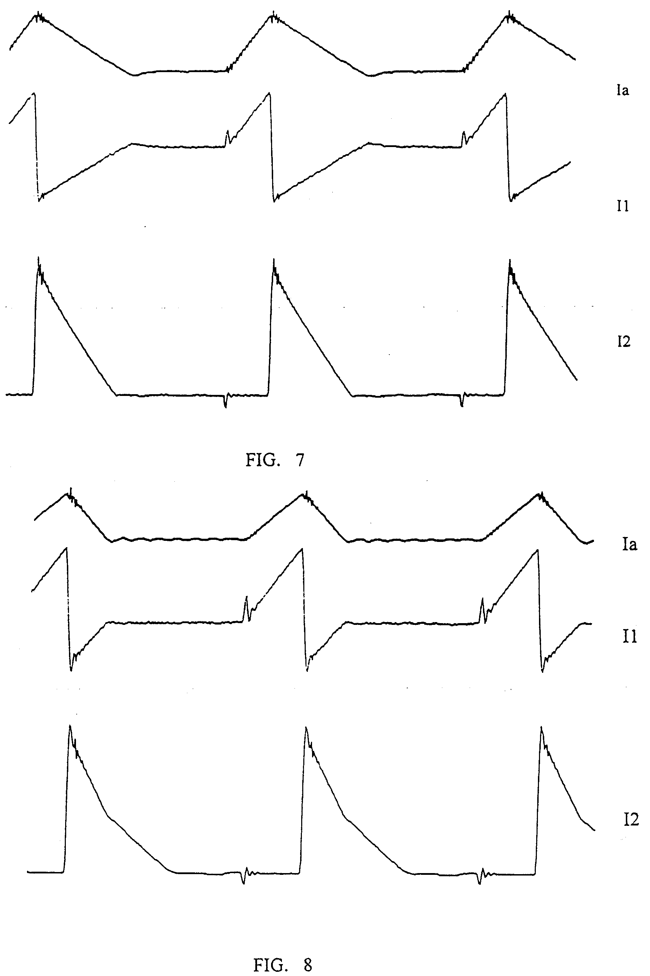

In Fig. 7 the mains voltage has the maximum value. In regard to the current of the inductance L the transformer M operates as a forward-type transformer. The current Ia feeds the energy via the transformer both to the secondary circuit and to the filter capacitor C. The energy of the magnetic field of the transformer is returned back to the filter capacitor C.

In Fig. 8 the instantaneous value of the mains voltage is about 50 % of the maximum. The transformer M is first operating in forward mode of operation, until Ia becomes zero. At the same time a part of the energy of the transformer is returned back to the capacitor C. Thereafter, the rest of the energy of the transformer is transferred to the secondary circuit as in the normal flyback operation.

The operation of the circuit according to the invention provides a plurality of advantages over, for example, the circuit of DE-A1 40 25 322 in which, again with reference to Fig. 1 of the document, the energy is first charged in the inductance La (when the switch T1 is conductive). Then the energy is discharged from the inductance La through the diode D1 to the filter capacitor Cb (when T1 is non-conductive). Thereafter the energy is charged from the filter capacitor Cb to the primary winding of the transformer Tr (when T1 is conductive). When T1 becomes non-conductive the energy is transferred to the secondary winding of the transformer Tr. For the rising of the voltage at the capacitor Cb the same must have a higher voltage rating. For the same reason the voltage over the transistor switch is also higher, and the voltage and current ratings of the transistor used must also be higher. The diode D1 used in the circuit must in a continuously operating power supply be a so-called ultrafast-type diode, which also make the circuit more expensive.

On the contrary, in the circuit of the invention the energy is also first charged in the inductance L (when S1 is conductive). Thereafter, when S1 becomes non-conductive, a significant part of the energy, depending on the instantaneous value of the mains voltage, is transferred directly through the diode D1, the transformer M and a secondary diode D2 to the output. In regard to this energy the transformer M operates in the forward mode in which case the energy is not charged in the magnetic field of the transformer M or in the filter capacitor C. Due to this characteristic of operation there is no significant rising of voltage at the capacitor C or at the transistor switch S1. So, inexpensive normal capacitors may be used, and lower voltage and current ratings may be selected for the MOSFET transistors used in the implementation of the inventive circuit.

Fig. 9 shows the current I drawn from the mains by the normal switched-mode power supply, and the mains voltage U, and Fig. 10 shows the current I drawn from the mains by the same switched-mode power supply, and the mains voltage U, when the power supply is provided with the circuit according to the invention.

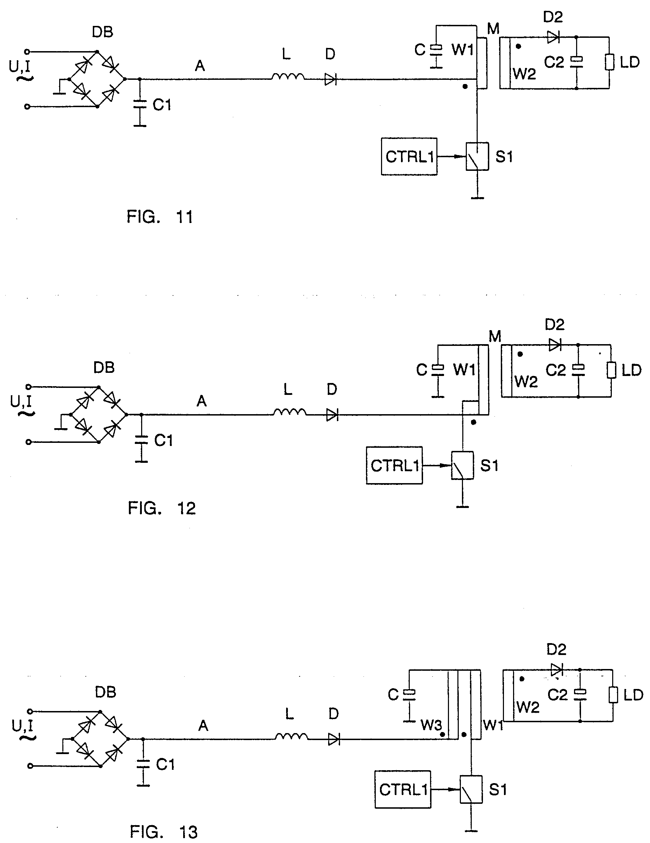

Figures 11 - 13 present various embodiments of the circuit according to the invention in regard to connecting the coupling A to the primary circuit. The coupling A may be connected to a tap point of the primary winding W1, as shown in Fig. 11. Another possibility is to connect the coupling A to an extension of the primary winding W1, as shown in Fig. 12. Fig. 13 shows still another embodiment in which a winding W3 is coupled in parallel with the primary winding W1, and the coupling A is connected to the winding W3. The connection may be made also to a tap point of the winding W3.

The invention may vary within the scope defined by the accompanying claims.

## Claims

1. A circuit for achieving a higher power factor in a switched-mode power supply, which includes at least
a full-wave rectifier (DB) connected to an AC energy distribution source,
a transformer (M) having a primary circuit including at least a filter capacitor (C), a primary winding (W1) and a controlled switch (S1) connected in series from ground to ground, or respectively, and a secondary circuit (W2, D2, C2, LD), and
a coupling (A) between the full-wave rectifier (DB) and the primary circuit (C, W1, S1) for feeding the energy from the rectifier (DB) to the transformer (M), **characterized** in that said coupling (A) is formed by an inductance (L) and a diode (D), having the forward direction from the rectifier (DB) to the primary circuit (C, W1, S1), connected in series, the coupling (A) being connected in the primary circuit (C, W1, S1) to a point between the switch (S1) and the filter capacitor (C) in such a way that at least a part of the primary winding (W1) is between the point and the filter capacitor (C).

2. A circuit according to claim 1, **characterized** in that the coupling (A) for feeding energy is connected to a point between the primary winding (W1) and the switch (S1).

3. A circuit according to claim 1, **characterized** in that the coupling (A) for feeding energy is connected to a tap point of the primary winding (W1).

4. A circuit according to claim 1, **characterized** in that the coupling (A) for feeding energy is connected to an extension of the primary winding (W1).

5. A circuit for achieving a higher power factor in a switched-mode power supply, which includes at least
a full-wave rectifier (DB) connected to an AC energy distribution source,
a transformer (M) having a primary circuit including at least a filter capacitor (C), a primary winding (W1) and a controlled switch (S1) connected in series from ground to ground, or respectively, and an additional winding (W3) in parallel with the primary winding (W1) and connected at the first end thereof to a point between the primary winding (W1) and the filter capacitor (C), and a secondary circuit (W2, D2, C2, LD), and
a coupling (A) between the full-wave rectifier (DB) and the primary circuit (C, W1, W3, S1) for feeding the energy from the rectifier (DB) to the transformer (M), **characterized** in that said coupling (A) is formed by an inductance (L) and a diode (D), having the forward direction from the rectifier (DB) to the primary circuit (C, W1, W3, S1), connected in series, the coupling (A) being connected in the primary circuit (C, W1, W3, S1) to the second end or a tap point of the winding (W3).

6. A circuit according to any of the preceding claims, **characterized** in that the transformer (M) is operating both in the flyback mode and the forward mode of operation.

7. A circuit according to any of the preceding claims, **characterized** in that the value of the inductance (L) is of the order of the inductance value of the primary winding (W1).
